(19) Europäisches Patentamt
European Patent Office
Office européen des brevets

(11) **EP 1 655 900 B1**

(12) **FASCICULE DE BREVET EUROPEEN**

(45) Date de publication et mention
de la délivrance du brevet:
**09.01.2008 Bulletin 2008/02**

(51) Int Cl.:
*H04L 12/44* *(2006.01)* *H04L 12/56* *(2006.01)*

(21) Numéro de dépôt: **05292372.9**

(22) Date de dépôt: **08.11.2005**

(54) **Procédé de dimensionnement d'unités de transport de flux affluents sur un lien entre deux noeuds d'un réseau de transport**

Dimensionierungsverfahren für Datenrahmen von Verkehrsströmen auf einer Verbindung zwischen zwei Knoten eines Transportnetzes

Method for dimensioning data frames of traffic flows on a link between two nodes of a transport network

(84) Etats contractants désignés:
**DE ES GB IT**

(30) Priorité: **09.11.2004 FR 0411946**

(43) Date de publication de la demande:
**10.05.2006 Bulletin 2006/19**

(73) Titulaire: **Sagem SA**
**75015 Paris (FR)**

(72) Inventeur: **Teboulle, Henry**
**94700 Maison-Alfort (FR)**

(74) Mandataire: **Maillet, Alain**
**Cabinet le Guen & Maillet,**
**5, Place Newquay,**
**B.P. 70250**
**35802 Dinard Cedex (FR)**

(56) Documents cités:
**US-A- 5 689 508        US-A1- 2002 059 408**
**US-B1- 6 377 583**

**Description**

La présente invention concerne un procédé de dimensionnement d'unités de transport de flux affluents sur un lien entre deux noeuds d'un réseau de transport. Dans une application particulière de la présente invention, ledit réseau de transport est un réseau à hiérarchie synchrone, du type SDH ou SONET, lesdites unités de transport de flux affluents étant alors des containers virtuels, par exemple VC12, regroupés dans des groupes de containers virtuels VCG. Quant aux flux affluents, ils peuvent être des flux Ethernet ainsi conformes à la norme IEEE 802.3.

Le document US-6377583-B1 décrit une méthode de dimensionnement d'unités de transport entre deux noeuds d'un réseau de transport, ladite méthode incluant la détermination de paramètres de trafic comme le débit nécessaire.

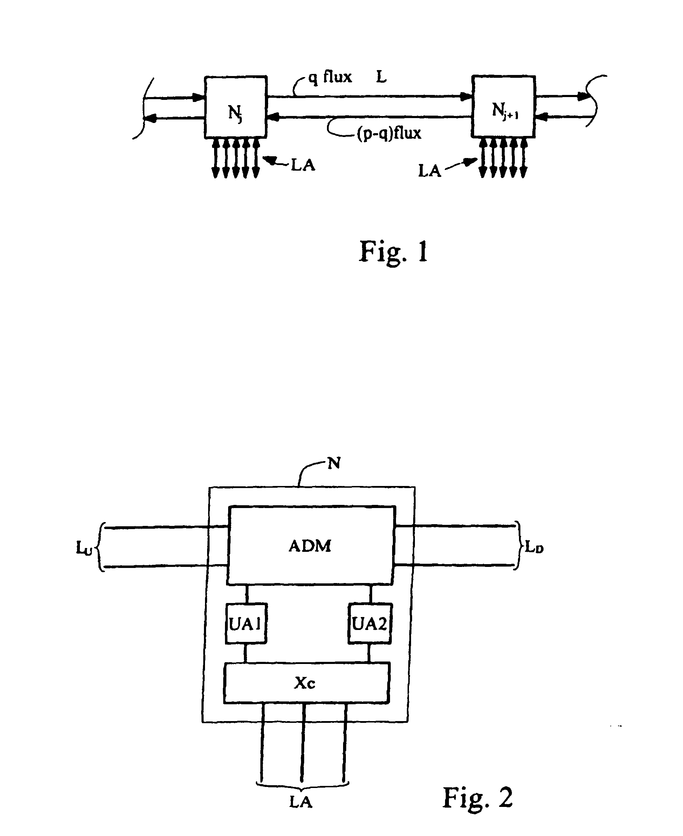

A la Fig. 1, on a représenté deux noeuds Nj et Nj+1 d'un réseau de transport comportant **M** noeuds. Les noeuds Nj et Nj+1 sont reliés l'un à l'autre par un lien bidirectionnel **L**. Chacun de ces deux noeuds Nj et Nj+1 est également relié à un ou plusieurs autres noeuds du même réseau de transport (non représentés). Ils sont prévus pour recevoir et émettre des flux affluents ainsi que pour les aiguiller ou router sur différents liens affluents LA. Dans le réseau de **M** noeuds, le nombre total de liens affluents est de **P**.

On a représenté à la Fig. 2, un noeud N qui est essentiellement constitué d'un multiplexeur ADM d'ajout/retrait (Add and Drop Multiplexer) recevant en amont et en aval des flux multiplexés par des liens $L_U$ et $L_D$, une matrice de commutation Xc pour commuter entre eux les flux affluents sur les liens affluents LA et ceux qui sont issus du multiplexeur ADM, et, enfin, des unités d'adaptation UA1 et UA2 prévues pour adapter la structure de données des flux sur les liens affluents LA et des flux issus ou à destination du multiplexeur ADM.

Par exemple, le réseau de transport est un réseau du type à Hiérarchie Synchrone, par exemple SDH ou SONET si bien que les trames circulant sur les liens L entre noeuds sont des trames à multiplexage temporel (par exemple STM-1, STM-4, etc. ou OC-1, OC-3, etc.) constituées de containers virtuels (par exemple VC12, VC3, VC4, etc. ou VC11, VC2, etc.). En ce qui concerne SDH, on pourra notamment se reporter aux recommandations de l'ITU G. 707 et G.783. De plus, les containers virtuels sont agrégés via une opération de concaténation virtuelle ou contiguë pour constituer un groupe de containers virtuels, appelé VCG.

Toujours à titre d'exemple, les liens affluents LA portent des flux Ethernet qui sont donc conformes à la norme IEEE 802.3. Dans ce dernier cas, les unités d'adaptation UA1 et UA2 sont des unités fonctionnant selon un protocole d'adaptation qui peut être du type PPP (Point-to-point Protocol) défini notamment dans la requête pour commentaires RFC 2615 de l'IETF, du type X86 du nom de la recommandation de l'ITU ou du type GFP (Generic Framing Procedure) faisant l'objet de la recommandation G.7041 de l'ITU.

Dans la suite de la description, on considérera un réseau de transport du type SDH, des affluents Ethernet et le protocole d'adaptation GFP mais on comprendra que l'invention ne se limite pas à ce cas particulier.

On considère, dans un réseau, une liaison multipoint établie entre **n** noeuds de ce réseau. On notera que **p** flux affluents sont alors concernés par cette liaison multipoint. On notera encore que, dans ce réseau, plusieurs liaisons multipoint peuvent être établies, chacune d'elles avec des noeuds différents ou pas, en nombre différent ou pas.

On considère maintenant un lien L entre deux noeuds adjacents quelconques Nj et $N_{j+1}$ du réseau.

Tant que l'on considère une seule liaison multipoint de $\underline{n}$ noeuds, sur le lien L, **p** flux circulent, les uns dans un sens, les autres dans l'autre sens. Plus précisément, à partir du noeud Nj (voir Fig. 1), le lien L transmet à destination du noeud $N_{j+1}$ un certain nombre de flux, par exemple **q** flux, alors qu'à partir du noeud $N_{j+1}$, le lien **L** transmet à destination du noeud Nj (**p - q**) flux..

On notera que le lien L est bidirectionnel de manière que le débit qui est alloué à un sens est égal au débit qui est alloué à l'autre sens.

Chaque flux d'ordre i, noté $F_i$, sur un lien affluent $LA_i$, présente un débit qui peut varier entre une valeur nulle et une valeur maximale appelée débit crête, noté $PIR_i$ comme Peak Information Rate. L'opérateur responsable de la gestion du réseau de transport garantit un débit qui de ce fait est appelé débit garanti, noté $E_i$, parfois appelé CIR comme Commited Information Rate, et espère que l'utilisateur ne dépassera que rarement ce débit garanti au-delà d'un débit que l'on nomme ici débit maximum espéré et que l'on note $\overline{E_i^{\cdot}}$.

Ledit procédé de dimensionnement des unités de transport de flux affluents d'une liaison multipoint sur un lien entre deux noeuds adjacents d'un réseau de transport inclut une étape de détermination du débit à provisionner pour le transport sur ledit lien de chaque flux affluent de la liaison et une étape de détermination du débit nécessaire au transport sur ledit lien par lesdites unités de transport de tous lesdits flux affluents de ladite liaison.

De manière générale, le débit à provisionner pour le transport sur ledit lien d'un flux affluent d'une liaison multipoint donnée est égal au débit maximum espéré $\mathbf{E_i^{\cdot}}$ pondéré par un facteur, dit facteur d'encapsulation, dépendant de l'encapsulation des paquets du flux affluent considéré dans des unités de transport du réseau de transport.

Actuellement, la détermination du débit nécessaire au transport sur ledit lien par lesdites unités de transport de tous lesdits flux affluents d'une liaison multipoint donnée consiste à rechercher des valeurs maximales de débit permettant le transport des flux affluents dans lesdites unités de transport. Cette solution présente le désavantage de ne pas donner des valeurs optimales si bien que la bande passante de chaque lien du réseau n'est pas optimisée.

Le but de la présente invention est de résoudre ce problème particulier et de proposer un procédé de dimensionnement d'unités de transport pour le transport des flux affluents d'une liaison multipoint sur un lien entre deux noeuds d'un réseau de transport participant à ladite liaison qui ne présente pas les désavantages mentionnés ci-dessus.

Pour ce faire, pour chacune desdites liaisons multipoint constituant ledit réseau de transport, le débit nécessaire au transport par lesdites unités de transport desdits flux affluents de ladite liaison multipoint est égal à la plus petite somme des débits à provisionner des flux affluents de ladite liaison multipoint circulant, d'une part, dans un sens et, d'autre part, dans l'autre sens sur ledit lien.

Selon une autre caractéristique de l'invention, le débit nécessaire au transport par lesdites unités de transport de tous les flux affluents de toutes les liaisons multipoint constituant le réseau de transport impliquant ledit lien est la somme des débits nécessaires pour le transport sur ce lien de chacune des liaisons multipoint déterminés précédemment.

Avantageusement, il comporte en outre, pour chacune desdites liaisons multipoint impliquant ledit lien, une étape de détermination du nombre d'unités de transport nécessaires au transport sur ledit lien de tous les flux affluents de ladite liaison multipoint comme étant égal au nombre entier supérieur ou égal au rapport du débit nécessaire pour le transport sur ce lien de ladite liaison multipoint déterminé précédemment par le débit utile d'une unité de transport.

Lorsque chaque flux affluent est lié à un contrat de trafic définissant un débit garanti et un débit crête, ladite étape de détermination du débit à provisionner pour le transport sur ledit lien de chaque flux affluent comprend :

- la détermination du débit maximal espéré de chaque flux affluent par addition du débit garanti défini par le contrat de trafic lié audit flux et d'un sur-débit égal à la différence entre débit crête et débit garanti dudit contrat de trafic pondérée par un facteur de risque, puis à
- la pondération du résultat par un facteur d'encapsulation égal au rapport du nombre d'octets nécessaires dans une trame du réseau de transport pour le transport du flux affluent concerné au nombre d'octets dudit flux affluent.

La présente invention concerne également un procédé de dimensionnement d'unités de transport de flux affluents sur un lien entre deux noeuds d'un réseau de transport, ledit réseau de transport étant prévu pour assurer des liaisons multipoint. Il est du type, comme précédemment, incluant, pour chaque liaison multipoint impliquant ledit lien une étape de détermination du débit à provisionner pour le transport sur ledit lien de tous les flux affluents de ladite liaison multipoint et une étape de détermination du débit nécessaire au transport par lesdites unités de transport desdits flux affluents de ladite liaison multipoint. Il est caractérisé en ce que ladite étape de détermination du débit nécessaire au transport desdits flux affluents inclut, pour chacune des liaisons multipoint impliquant ledit lien :

- une étape de détermination du débit nécessaire au transport desdits flux affluents de ladite liaison multipoint sur ledit lien dans chaque topologie logique sans re-bouclage que peut prendre ladite liaison multipoint, ledit débit nécessaire dans une topologie logique étant égal à la plus petite somme des débits à provisionner des flux affluents de ladite liaison multipoint circulant, d'une part, dans un sens et, d'autre part, dans l'autre sens sur ledit lien,
- une étape de détermination du débit nécessaire pour le transport sur ledit lien desdits flux affluents de ladite liaison multipoint égal au débit maximum parmi les débits nécessaires de toutes les topologies logiques que peut prendre chaque liaison multipoint dudit réseau de transport.

Le débit à provisionner pour ledit lien du réseau de transport est alors la somme des débits nécessaires pour le transport sur ce lien de chacune des liaisons multipoints précitées.

Par exemple, pour déterminer chaque topologie logique que peut prendre chaque liaison multipoint dudit réseau de transport, ledit procédé inclut une étape de simulation, à partir d'une topologie logique de fonctionnement normal, d'une panne sur un lien dudit réseau de transport puis à mettre en oeuvre un protocole d'établissement de la nouvelle topologie logique de secours dudit lien, par exemple par la mise en oeuvre d'un protocole spécifique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

La Fig. 1 est un schéma montrant deux noeuds d'un réseau de transport reliés l'un à l'autre par un lien sur lequel circulent des unités de transport de flux affluents qui peuvent dimensionnées selon un procédé conforme à la présente invention,
La Fig. 2 est schéma synoptique d'un noeud d'un réseau de transport pouvant mettre en oeuvre un procédé selon la présente invention,
Les Figs 3 à 6 sont des schémas qui montrent les noeuds d'un réseau de transport qui sont impliqués dans une unique liaison multipoint, ici, à titre d'exemple en anneau, et ce, dans respectivement quatre topologies logiques différentes, et

La Fig. 7 est une vue de deux noeuds d'un réseau de transport reliés l'un à l'autre par un lien supportant plusieurs liaisons multipoint du réseau de transport.

Dans la suite de la description, on considérera un réseau de transport du type SDH, des affluents Ethernet et le protocole d'adaptation GFP mais on comprendra que l'invention ne se limite pas à ce cas particulier.

A la Fig. 1, on a représenté deux noeuds Nj et Nj+1 d'un réseau de transport participant à l'établissement d'une liaison multipoint impliquant, par exemple n noeuds. Ces deux noeuds Nj et Nj+1 sont reliés l'un à l'autre par un même lien bidirectionnel L. Chacun d'eux est également relié à un ou plusieurs autres noeuds du même réseau de transport (non représentés). Ils sont prévus pour recevoir et émettre des flux sur des liens affluents LA et également pour aiguiller les différents flux reçus pour les ré-émettre. On considère une liaison multipoint impliquant **n** noeuds et un nombre total de liens affluents égal à **p**, le nombre total de flux que peuvent s'échanger les noeuds impliqués dans la liaison multipoint étant alors aussi de **p**.

Dans la suite de la description, on considèrera une seule liaison multipoint si bien qu'entre les deux noeuds Nj et $N_{j+1}$ du réseau de transport, **p** flux circulent sur un lien L de la manière suivante : **q** flux dans un sens, et **(p-q)** flux dans l'autre sens.

On notera que le lien L est bidirectionnel de manière que le débit qui est alloué à un sens est égal au débit qui est alloué à l'autre sens.

On rappelle que chaque flux d'ordre i, noté $F_i$, présente un débit qui peut varier entre une valeur nulle et une valeur maximale appelée débit crête, noté $PIR_i$ comme Peak Information Rate. L'opérateur responsable de la gestion du réseau de transport garantit un débit garanti, noté $E_i$, et espère que l'utilisateur ne dépassera que rarement ce débit garanti au-delà d'un débit maximum espéré noté $E_i^{\cdot}$. Pour pouvoir transporter le flux $F_i$, il est nécessaire de provisionner un débit $D_i$ pour ce flux $F_i$.

Le problème que cherche à résoudre la présente invention est de dimensionner les unités de transport telles que des groupes de containers virtuels VCG de manière à permettre le transport entre deux noeuds du réseau de tous les flux affluents d'une liaison multipoint donnée. Ces unités de transport permettent ainsi le transport d'un débit, noté $D_{VCGj/j+1}$ et appelé débit nécessaire au transport sur ledit lien entre deux noeuds des flux affluents de ladite liaison multipoint, j et j + 1 étant les ordres des deux noeuds considérés.

Selon la présente invention, le débit nécessaire $D_{VCGj,j+1}$ qui est alloué à un groupe VCGj,j+1 pour le transport sur un lien L entre deux noeuds j et j+1 du réseau de tous les flux affluents d'une liaison multipoint est égal à la plus petite somme des débits à provisionner $D_i$ des q flux circulant dans un sens et des (p-q) flux circulant dans l'autre sens dudit lien L considéré. On peut donc écrire :

$$D_{VCGj,j+1} = \min\left[\left(\sum_{i=1}^{q} D_i\right);\left(\sum_{i=q+1}^{p-q} D_i\right)\right] \quad i=q+1$$

D'après cette expression, on peut voir que la limitation de trafic entre deux noeuds du réseau de transport est apportée par les débits les plus faibles, c'est-à-dire par les débits qui sont nécessaires et suffisants pour que les flux respectent les contrats de trafic.

Dans le cas où le réseau de transport prévoit l'encapsulation des flux affluents dans des unités de transport prévues chacune pour le transport d'un débit utile donné $D_{Cn}$, le nombre d'unités nécessaires au transport entre deux noeuds j et j+1 des flux affluents d'une liaison multipoint est égal à :

$$N_{j,j+1} = entier\_supérieur\left[D_{VCGj,j+1}\Big/D_{Cn}\right]$$

Par exemple, dans le cas d'un réseau de transport du type à Hiérarchie Synchrone SDH, l'encapsulation des flux est faite dans des containers dont le débit utile transporté est Cn. Chaque container est ensuite pourvu d'un entête de manière à former ce qui est appelé un container virtuel, noté VCn, requerrant un débit $D_{VCn}$ pour son transport. $N_{j,j+1}$ représente le nombre de containers virtuels d'un même type pour assurer le transport de tous les affluents d'une liaison multipoint entre deux noeuds j et j+1 impliqués dans ladite liaison.

On rappelle ici que, pour la hiérarchie SDH, le débit utile transporté et le débit requis pour le transport par un container d'un type donné est mentionné dans le tableau ci-dessous :

| Type de container | Débit utile | Débit requis |
|---|---|---|
| VC11 | 1,60 Mbits/sec | 1,664 Mbits/sec |
| VC12 | 2,176 Mbits/sec | 2,24 Mbits/sec |
| VC2 | 6,784 Mbits/sec | 6,848 Mbits/sec |
| VC3 | 48,384 Mbits/sec | 48,960 Mbits/sec |
| 1 VC4 | 149,76 Mbits/sec | 150,336 Mbits/sec |

Du fait que $N_{j,j+1}$ est nécessairement un nombre entier, mais que le résultat de la division mentionnée ci-dessus n'est généralement pas un nombre entier, la valeur retenue est l'entier immédiatement supérieur ou égal.

On va expliciter ci-dessous le débit $D_i$ qu'il est nécessaire de provisionner pour le transport d'un flux affluent élémentaire $F_i$ d'une liaison multipoint entre tout couple de noeuds j et j+1 d'un réseau de transport impliqués dans ladite liaison et, ce, dans le cas où ce flux affluent élémentaire est un flux Ethernet. Compte tenu d'un contrat de trafic définissant pour le flux $F_i$, d'une part, le débit garanti $E_i$ ($E_i$ est communément appelé CIR comme Commited Information Rate) et, d'autre part, le débit crête $PIR_i$ (débit communément appelé Peak Information Rate), le débit maximum espéré $\mathbf{E_i^{'}}$ d'un flux Ethernet $F_i$ (voir définition ci-dessus) peut être donné par la relation suivante :

$$\mathbf{E_i^{'}} = E_i + \alpha\left(PIR_i - E_i\right)$$

où $\alpha$ est le coefficient de risque choisi par l'opérateur de services gérant le réseau considéré (on notera que $\alpha$ est un nombre compris entre 0 et 1).

Compte tenu du fait que l'encapsulation de trames Ethernet dans des unités de transport du réseau de transport demande quelques octets supplémentaires, le débit $D_i$ qu'il est nécessaire de provisionner pour le transport du flux affluent $F_i$ est supérieur d'un facteur k au débit maximum espéré $\mathbf{E_i^{'}}$ du flux Ethernet à transporter, ce qui peut s'écrire :

$$\mathbf{D_i = k \cdot E_i^{'}}$$

Le facteur d'encapsulation k est égal au rapport du nombre d'octets requis dans une trame du réseau de transport pour le transport du flux affluent considéré au nombre d'octets dudit flux affluent

On notera donc que k dépend du nombre d'octets supplémentaires qui sont ajoutés à chaque trame Ethernet lors de son encapsulation et dépend donc de la méthode d'encapsulation mise en oeuvre.

Divers procédés d'encapsulation peuvent être prévus : PPP, X86, GFP, etc. A titre d'exemple, on s'intéressera à l'encapsulation GFP. Sur les détails de cette encapsulation, on se reportera utilement à la recommandation G.7041 de l'ITU.

Lors de cette encapsulation, 8 nouveaux octets sont ajoutés à la trame Ethernet : il s'agit (donnés ici à titre d'information) des octets nommés PLI, cHEC, Type et tHEC. Par contre, ni les octets du préambule (sept octets contenant la séquence de bits 10101010), ni l'octet du délimiteur (séquence binaire 10101011), ni les octets d'intergap (Inter-Packet Gap = IPG) dc la trame Ethernet ne sont repris dans la trame GFP.

Deux options sont prévues. Selon la première, quatre octets de vérification de trame GFP (Frame Check Sequence = FCS) sont utilisés lors de l'encapsulation GFP. Dans ce cas, le nombre d'octets réellement utilisés est supérieur de 12 octets au nombre d'octets de la trame Ethernet. Ainsi, par exemple pour une trame de 64 octets, le facteur k prend la valeur :

$$\mathbf{k = (64 + 12)/64 = 1,1875.}$$

Selon la seconde, les quatre octets de vérification de trame ne sont pas utilisés lors de l'encapsulation GFP. Dans ce cas, le nombre d'octets réellement utilisés est supérieur de 8 octets au nombre d'octets de la trame Ethernet. Ainsi, toujours par exemple pour une trame de 64 octets, le facteur k prend la valeur :

$$k = (64+8)/64 = 1,125$$

Une troisième option consiste à utiliser les quatre octets FCS et à prévoir un entête étendu (payload extension header) de quatre octets. Le facteur k devient :

$$k = (64 + 16)/64 = 1,25$$

Comme on ne maîtrise normalement pas la longueur des trames, lors de la détermination du facteur k, on considérera le cas le plus défavorable des trames les plus courtes, à savoir les trames à 64 octets données ci-dessus. Cependant, on pourra également calculer k comme on vient de le faire pour d'autres longueurs de trames. Par exemple, des longueurs de trame de 1548 octets pour les trames dite ISL ou encore la longueur des trames dites Jumbo.

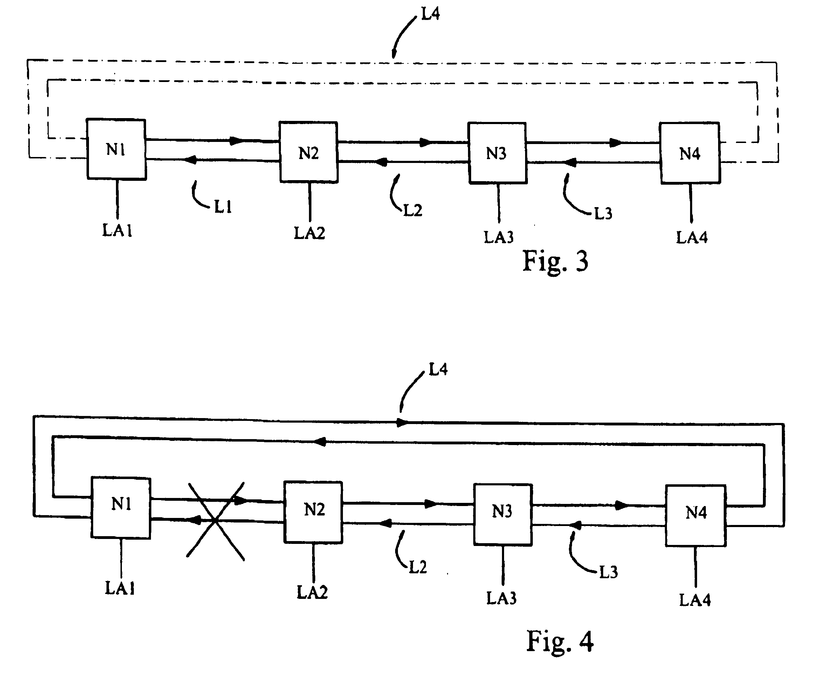

On va maintenant donner un exemple de dimensionnement pour l'encapsulation de flux Ethernet dans des containers du type VC-12 conformes à la hiérarchie SDH. Pour ce faire, on considère une liaison multipoint impliquant quatre noeuds N1, N2, N3 et N4 d'un réseau. On a représenté à la Fig. 3 ces quatre noeuds N1, N2, N3 et N4 (et uniquement ceux-ci) reliés entre eux en anneau avec néanmoins le lien L4 entre les noeuds N1 et N4 représenté en traits pointillés, qui n'est normalement pas utilisé autrement qu'en lien de secours. Dans cet exemple, les noeuds N1, N2, N3 et N4 comportent chacun un lien affluent LA1, LA2, LA3 et LA4. On peut constater que le lien L1 entre le noeud N1 et le noeud N2 transporte, dans un sens, le flux F1 issu du lien affluent LA1 et, dans l'autre sens, les flux F2, F3 et F4 issus respectivement des liens affluents LA2, LA3 et LA4. De même, le lien L2 entre les noeuds N2 et N3 transporte, dans un sens, les flux F1 et F2 et, dans l'autre sens, les flux F3 et F4. Quant au lien L3 entre les noeuds N3 et N4, il transporte, dans un sens, les flux F1, F2 et F3 et, dans l'autre sens, le flux F4.

A titre d'exemple numérique, le lien affluent Ethernet LA1 a un débit garanti $E_1$ = 10 Mbits/s et de débit crête $PIR_1$ = 20 Mbits/s, le lien affluent Ethernet LA2 un débit garanti $E_2$ = 10 Mbits/s et un débit crête $PIR_2$ = 20 Mbits/s, le lien affluent LA3 un débit garanti $E_3$ = 20 Mbits/s et un débit crête $PIR_3$ = 30 Mbits/s et le lien affluent LA4 un débit garanti $E_4$ = 10 Mbits/s et un débit crête $PIR_4$ = 20 Mbits/s. On suppose que le coefficient de risque $\alpha$ est égal à 0,1 et que l'encapsulation est une encapsulation GFP sans octets de vérification FCS, de trames Ethernet de 64 octets ne reprenant pas leur préambule, leur délimiteur (le facteur d'encapsulation est alors de 1,125).

Les débits $D_1$, $D_2$ et $D_4$ à provisionner pour chaque groupe de canaux virtuels pour le transport respectivement des flux affluents $F_1$, $F_2$ et $F_4$ sont égaux à :

$$D_1 = D_2 = D_4 = 1,125 \left[10 + 0,1(20 - 10)\right] = 12,375 \text{ Mbits/s}$$

De même, le débit $D_3$ à provisionner pour le groupe de canaux virtuels pour le transport du flux affluent $F_3$ est égal à :

$$D_3 = 1,125[20 + 0,1(30-20)] = 23,625 \text{ Mbits/s}$$

Si l'on s'intéresse au lien L1 entre les deux noeuds N1 et N2, :

$$D_{VCG1/2} = \min \left[(D1) ; (D2 + D3 + D4)\right] = 12,375 \text{ Mbits/s}$$

Si l'on s'intéresse au lien L2 entre les deux noeuds N2 et N3, le débit $D_{VCG2/3}$ nécessaire au groupe de canaux virtuels VCG2/3 de ce lien est, conformément à la relation donnée ci-dessous :

$$D_{VCG2/3} = \min[(D_1 + D_2) ; (D_3 + D_4)] = 24,75 \text{ Mbits/s}$$

Le débit $D_{VCG3/4}$ nécessaire au groupe de canaux virtuels VCG3/4 est :

$$D_{VCG3/4} = \min[(D_1 + D_2 + D3) ; (D_4)] = 12,375 \text{ Mbits/s}$$

Compte tenu du fait qu'un container virtuel VC-12 présente un débit utile de 2,176 Mbits/s, les nombres de containers virtuels VC-12 nécessaires pour transporter ces débits sont :

$$N_{1/2} = \text{entier\_supérieur } [12,375/2,176] = 6$$

$$N_{2/3} = \text{entier\_supérieur } [24,75/2,176] = 12$$

$$N_{3/4} = \text{entier\_supérieur } [12,375/2,176] = 6$$

Dans un réseau tel que celui dont il est question ici, des procédures sont prévues pour, en cas de rupture d'un lien entre deux noeuds, pouvoir modifier la topologie logique d'une liaison multipoint du réseau de transport et ainsi mettre en place des liens de secours pour le ré-acheminement du trafic. Par exemple, la nouvelle topologie logique est déterminée par un protocole spécifique, tel que le protocole nommé STP (Spanning Tree Protocol : standard IEEE 802.1d), ou RSTP (Rapid Spanning Tree Protocol : Standard IEEE 802.1w) ou MSTP (Multiple Spanning Tree Protocol : Standard IEEE 802.1s).

Un mode particulier (mode gestion) du protocole STP qui est spécifique à Ethernet permet, à des fins notamment de dimensionner le plus efficacement possible les groupes de canaux virtuels VCG transportés sur les liens du réseau, de simuler une panne par laquelle un lien donné (choisi par configuration de la simulation) entre deux noeuds est coupé et, après re-convergence du protocole STP, de donner une nouvelle topologie logique de la liaison multipoint concernée suite à cette panne. Selon la présente invention, on détermine alors pour chacun des liens du réseau dans sa nouvelle topologie logique le débit nécessaire pour le transport de tous les flux affluents dans chacun des groupes transportés et, ensuite, le nombre de containers virtuels nécessaires à assurer le trafic entre chaque paire de noeuds.

On va donner un exemple en considérant une liaison multipoint dans un réseau de transport dont la topologie logique est celle qui a déjà été donnée à la Fig. 3. Cette liaison implique donc quatre noeuds N1, N2, N3 et N4 reliés entre eux. Chacun des noeuds N1, N2, N3, N4 reçoit un lien affluent LA1, LA2, LA3, LA4 de débit maximum espéré $E_1^{'}$, $E_2^{'}$, $E_3^{'}$, $E_4^{'}$. Les noeuds N1 et N4 ne sont logiquement pas reliés entre eux car le lien L4 entre eux deux est un lien de secours.

On a représenté à la Fig. 4, la même liaison multipoint dans le même réseau dans une topologie logique de secours suite à une coupure du lien L1 entre les noeuds N1 et N2. On constate que le lien L2 entre le noeud N2 et le noeud N3 transporte maintenant, dans un sens, le seul flux F2 issu du lien affluent LA2 et, dans l'autre sens, les flux F1, F3 et F4 issus respectivement des liens affluents LA1, LA3 et LA4 et le lien L3 entre les noeuds N3 et N4 transporte, dans un sens, les flux F2 et F3 et, dans l'autre sens, les flux F1 et F4. Quant au lien L4 entre les noeuds N1 et N4, il transporte, dans un sens, le flux F1 et, dans l'autre sens, les flux F2, F3 et F4.

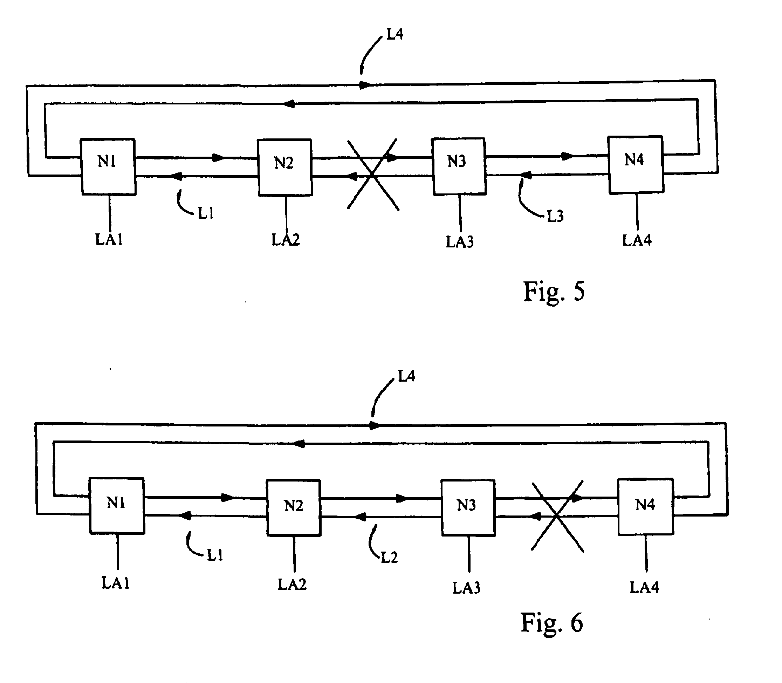

On a représenté à la Fig. 5, la même liaison multipoint dans le même réseau dans une topologie logique de secours suite à une coupure du lien L2 entre les noeuds N2 et N3. On constate que le lien L3 entre le noeud N3 et le noeud N4 transporte maintenant, dans un sens, le seul flux F3 issu du lien affluent LA3 et, dans l'autre sens, les flux F1, F2 et F4 issus respectivement des liens affluents LA1, LA2 et LA4. Le lien L4 entre les noeuds N1 et N4 transporte, dans un sens, les flux F1 et F2 et, dans l'autre sens, les flux F3 et F4. Quant au lien L1 entre les noeuds N1 et N2, il transporte, dans un sens, les flux F1, F3 et F4 et, dans l'autre sens, le flux F2.

De même, on a représenté à la Fig. 6, la même liaison multipoint dans le même réseau dans une topologie logique de secours suite à une coupure du lien L3 entre les noeuds N3 et N4. On constate que le lien L1 entre le noeud N1 et le noeud N2 transporte maintenant, dans un sens, les flux F4 et F1 respectivement issus des liens affluents LA4 et LA1 et, dans l'autre sens, les flux F2 et F3 issus respectivement des liens affluents LA2 et LA3. Le lien L4 entre les noeuds N1 et N4 transporte, dans un sens, le seul flux F4 et, dans l'autre sens, les flux F1, F2 et F3. Quant au lien L2 entre les noeuds N2 et N3, il transporte, dans un sens, les flux F1, F2 et F4 et, dans l'autre sens, le seul flux F3.

Dans des réseaux de transport de structure plus complexe, l'établissement de la nouvelle topologie logique suite à une coupure de liens est effectuée par un protocole du type STP (ou RSTP ou MSTP). Ce même protocole permet également des simulations de coupure de liens dont le choix est effectué par configuration par le jeu des priorités associées aux liens du réseau.

On va considérer le dimensionnement du lien L4 qui relie les noeuds N1 et N4 lorsqu'un des autres liens est coupé.

Lorsque le lien L1 entre les noeuds N1 et N2 est coupé, le débit nécessaire au groupe VCG4/1 pour le transport entre les noeuds N1 et N4 du flux F1, d'une part, et des flux F2, F3 et F4, d'autre part, que l'on note $D_{VCG4/1|1/2}$ est donné par la relation ci-dessous :

$$D_{VCG4/1|1/2} = \min\left[(D_1),(D_2 + D_3 + D_4)\right]$$

Le nombre, noté $N_{4/1|1/2}$, de containers virtuels VC12 que doit comporter le groupe $VCG_{4/1}$ pour assurer le trafic lorsque le lien 1/2 est coupé est alors :

$$N_{4/1|1/2} = \text{entier\_supérieur}\left[\frac{D_{VCG4/1|1/2}}{D_{C12}}\right]$$

On pourrait de même montrer que, lorsque le lien entre les noeuds N2 et N3 est coupé, le débit nécessaire au groupe VCG4/1 pour le transport entre les noeuds N1 et N4 des flux F1 et F2, dans un sens, et des flux F3 et F4, dans l'autre sens, que l'on note $D_{VCG4/1|2/3}$, est donné par la relation ci-dessous :

$$D_{VCG4/1|2/3} = \min\left[(D_1 + D_2),(D_3 + D_4)\right]$$

Le nombre de containers virtuels VC12 que doit alors comporter le groupe $VCG_{4/1}$ est alors :

$$N_{4/1|2/3} = \text{entier\_supérieur}\left[\frac{D_{VCG4/1|2/3}}{D_{C12}}\right]$$

Enfin, lorsque le lien entre les noeuds 3 et 4 est coupé, le débit nécessaire au groupe VCG4/1 pour le transport entre les noeuds N1 et N4 du flux F4, dans un sens, et des flux F1, F2 et F3, dans l'autre sens, que l'on note $D_{VCG4/1|3/4}$ est donné par la relation ci-dessous :

$$D_{VCG4/1|3/4} = \min\left[(D_4),(D_1 + D_2 + D_3)\right]$$

Le nombre de containers virtuels VC12 que doit alors comporter le groupe $VCG_{4/1}$ est alors :

$$N_{4/1|3/4} = \text{entier\_supérieur}\left[\frac{D_{VCG4/1|3/4}}{D_{C12}}\right]$$

Le dimensionnement optimal du groupe VCG4/1 pour l'ensemble des topologies logiques possibles de la liaison multipoint du réseau est alors donné lorsqu'il permettra le transport d'un débit nécessaire D égal au plus grand de ces débits nécessaires calculés pour chaque topologie :

$$D_{VCG4/1} = max\left[D_{VCG4/1|1/2} ; D_{VCG4/1|2/3} ; D_{VCG4/1|3/4}\right]$$

Le nombre de containers virtuels alloués à un lien sera alors :

$$N_{VCG4/1} = entier\_supérieur\left[D_{VCG4/1} \middle/ D_{C12}\right] = max\left[N_{VCG4/1|1/2} ; N_{VCG4/1|2/3} ; N_{VCG4/1|3/4}\right]$$

On va donner un exemple numérique. Supposons que les débits garantis sur les liens affluents LA1, LA2, LA3 et LA4 des noeuds N1, N2, N3 et N4 soient respectivement :

$$E1 = E2 = E3 = E4 = 10Mbits/s$$

Quant aux débits crête de ces interfaces, ils sont respectivement de :

$$PIR_1 = PIR_2 = PIR_3 = PIR_4 = 20Mbits/s$$

Le coefficient de risque de l'opérateur est supposé être de 0,1. Ainsi, les débits maximum espérés pour les liens affluents LA1, LA2, LA3 et LA4 sont :

$$E'_1 = E'_2 = E'_3 = E'_4 = 10+0,1(20 - 10) = 11Mbits/s$$

Le coefficient d'encapsulation est supposé être 1,125 (protocole GFP sans octets de vérification FCS, sans reprise dans les trames GFP du préambule et du délimiteur) si bien que les débits à provisionner $D_1$, $D_2$, $D_3$ et $D_4$ pour le transport de chaque flux affluent sont :

$$D_1 = D_2 = D_3 = D_4 = 1,125 \text{ x } 11 \text{ Mbits/s} = 12,375 \text{ Mbits/s}$$

Les débits nécessaires au transport de tous les flux sur le lien L4 lorsque les liens L 1, L2 et L3 sont respectivement coupés sont donc :

$$D_{VCG4/1|1/2} = 1,125 \text{ x min } [(11) ; (3\text{x} 11)] = 12,375 \text{ Mbits/s}$$

$$D_{VCG4/1|2/3} = 1,125 \text{ x min } [(11 + 11) ; (11 + 11)] = 24,75 \text{ Mbits/s}$$

$$D_{VCG4/1|3/4} = 1,125 \text{ x min } [(3\text{x}11) ; (11)] = 12,375 \text{ Mbits/s}$$

Le débit alloué $D_{VCG4/1}$ au groupe VCG4/1 sera alors de 24,75Mbits/s. Quant au nombre de containers VC12, il sera alors de :

$$N_{VCG4/1} = entier\_supérieur \text{ } [24,75/2,176] = 12$$

De même que l'on a considéré le lien L4 entre les noeuds N1 et N4, il est nécessaire de considérer chaque lien L1, L2, L3 dans toutes les topologies logiques possibles de la liaison multipoint du réseau, puis d'établir le débit à provisionner dans le groupe correspondant comme étant le plus grand débit à provisionner parmi les débits à provisionner respectivement calculés dans ces topologies logiques.

Jusqu'ici, on n'a considéré qu'une unique liaison multipoint dans un réseau. On va maintenant considérer que dans un réseau, plusieurs liaisons multipoint peuvent être établies, chacune d'elles impliquant un certain nombre de noeuds du réseau qui peut être différent de celui d'une autre liaison multipoint, des liens entre deux noeuds du réseau pouvant être partagés par plusieurs liaisons multipoint.

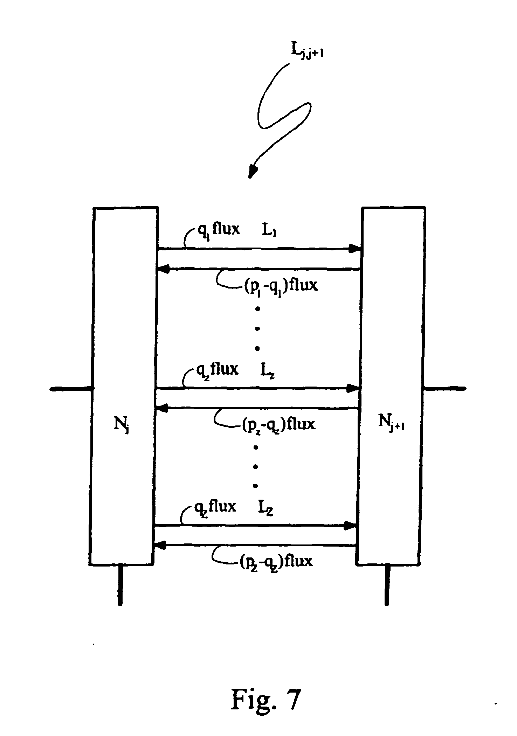

Dans la suite de la description, on va s'intéresser au lien qui relie deux noeuds d'un réseau impliqués dans plusieurs liaisons multipoint. Deux noeuds $N_j$ et $N_{j+1}$ reliés par un tel lien L sont représentés à la Fig. 7. Ce lien L est le support de Z liaisons multipoint $L_1$, ...,$L_z$, ...$L_Z$. Une liaison multipoint $L_z$ autorise la transmission de $p_z$ flux affluents qui, sur le lien $L_{j,j+1}$, se répartissent de la manière suivante : $q_z$ flux affluents transitent du noeud $N_j$ vers le noeud $N_{j+1}$ et ($p_z - q_z$) flux affluents transitent dans l'autre sens, c'est-à-dire du noeud $N_{j+1}$ vers le noeud $N_j$.

Si pour une liaison $L_z$, on met en oeuvre le procédé de dimensionnement qui a été décrit précédemment, on obtient :

-    le débit nécessaire, noté $D^z_{VCGj,j+1}$, qui est alloué au groupe VCGj,j+1 pour le transport sur le lien $L_{j,j+1}$ entre les deux noeuds Nj et $N_{j+1}$ de tous les flux affluents de la liaison multipoint $L_z$, lequel est donné par la relation :

$$D^z_{VCGj,j+1} = min\left[\left(\sum_{i=1}^{q^z} D_i\right); \left(\sum_{i=q^z+1}^{p^z-q^z} D_i\right)\right]$$

-    le nombre d'unités de transport nécessaires au transport entre les deux noeuds $N_j$ et $N_{j+1}$ de tous les flux affluents de la liaison multipoint $L_z$, lequel est donné par la relation suivante :

$$N^z_{j,j+1} = entier\_sup\acute{e}rieur\left[D^z_{VCGj,j+1} \Big/ D_{Cn}\right]$$

Le débit nécessaire au transport entre les deux noeuds $N_j$ et $N_{j+1}$ de tous les flux affluents de toutes les liaisons multipoint $L_z$ impliquant lesdits deux noeuds est la somme des débits nécessaires $D^z_{VCGj,j+1}$ pour le transport sur ce lien de chacune des liaisons multipoint $L_1$ à $L_Z$, ce qui peut s'écrire :

$$D_{VCGj,j+1} = \sum_{z=1}^{Z} D^z_{VCGj,j+1}$$

Quant au nombre d'unités de transport, il est égal à la somme des nombres $N^z_{j,j+1}$ d'unités de transport nécessaires au transport entre les deux noeuds $N_j$ et $N_{j+1}$ de tous les flux affluents de toutes les liaisons multipoint $L_1$ à $L_Z$, soit :

$$N_{VCGj,j+1} = \sum_{z=1}^{Z} N^z_{j,j+1}$$

**Revendications**

**1.**   Procédé de dimensionnement d'unités de transport de flux affluents sur un lien entre deux noeuds d'un réseau de transport, ledit réseau de transport étant prévu pour assurer des liaisons multipoint, ledit procéder étant **caractérisé** pour chacune desdites liaisons multipoint impliquant ledit lien par :

a) une étape de détermination du débit à provisionner pour le transport sur ledit lien de tous les flux affluents de ladite liaison multipoint, le débit à provisionner ($D_i$) pour un flux affluent ( $F_i$) étant défini par le débit maximum espéré ($E_i$) pondéré par un facteur dépendant de l'encapsulation des paquets dudit flux affluent, et
b) une étape de détermination du débit nécessaire au transport par lesdites unités de transport desdits flux affluents de ladite liaison multipoint,

étant **caractérisé** que, pour chacune desdites liaisons multipoint, ladite étape b) consiste à calculer le débit nécessaire au transport par lesdites unités de transport desdits flux affluents de ladite liaison multipoint comme étant la plus petite somme des débits à provisionner déterminés à l'étape a) des flux affluents de ladite liaison multipoint circulant, d'une part, dans un sens et, d'autre part, dans l'autre sens sur ledit lien.

2. Procédé de dimensionnement selon la revendication 1, **caractérisé en ce que** le débit nécessaire au transport par lesdites unités de transport de tous les flux affluents de toutes les liaisons multipoint impliquant ledit lien est la somme des débits nécessaires pour le transport sur ce lien de chacune des liaisons multipoint déterminées à l'étape b).

3. Procédé de dimensionnement selon la revendication 1, **caractérisé en ce qu'**il comporte en outre, pour chacune desdites liaisons multipoint impliquant ledit lien, une étape c) de détermination du nombre d'unités de transport nécessaires au transport sur ledit lien de tous les flux affluents de ladite liaison multipoint comme étant égal au nombre entier supérieur ou égal au rapport du débit nécessaire pour le transport sur ce lien de ladite liaison multipoint déterminé à l'étape b) par le débit utile d'une unité de transport.

4. Procédé de dimensionnement selon une des revendications précédentes, chaque flux affluent étant lié à un contrat de trafic définissant un débit garanti et un débit crête, **caractérisé en ce que** ladite étape a) comprend :

- la détermination du débit maximal espéré de chaque flux affluent par addition du débit garanti défini par le contrat de trafic lié audit flux et d'un sur-débit égal à la différence entre débit crête et débit garanti dudit contrat de trafic pondérée par un facteur de risque, puis à
- la pondération du résultat par un facteur d'encapsulation égal au rapport du nombre d'octets nécessaires dans une trame du réseau de transport pour le transport du flux affluent concerné au nombre d'octets dudit flux affluent.

5. Procédé de dimensionnement d'unités de transport de flux affluents sur un lien entre deux noeuds d'un réseau de transport, ledit réseau de transport étant prévu pour assurer des liaisons multipoint, ledit procédé incluant, pour chaque liaison multipoint impliquant ledit lien **caractérisé par** :

a) une étape de détermination du débit à provisionner pour le transport sur ledit lien de tous les flux affluents de ladite liaison multipoint, le débit à provisionner ($D_i$) pour un flux affluent ($F_i$) étant défini par le débit maximum espéré ($E_i$) pondéré par un facteur dépendant de l'encapsulation des paquets dudit flux affluent, et
b) une étape de détermination du débit nécessaire au transport par lesdites unités de transport desdits flux affluents de ladite liaison multipoint,

et par le fait que ladite étape de détermination du débit nécessaire au transport desdits flux affluents inclut, pour chacune des liaisons multipoint impliquant ledit lien :

- une étape de détermination du débit nécessaire au transport desdits flux affluents de ladite liaison multipoint sur ledit lien dans chaque topologie logique sans re-bouclage que peut prendre ladite liaison multipoint, ledit débit nécessaire dans une topologie logique étant égal à la plus petite somme des débits à provisionner déterminés à l'étape a) des flux affluents de ladite liaison multipoint circulant, d'une part, dans un sens et, d'autre part, dans l'autre sens sur ledit lien,
- une étape de détermination du débit nécessaire pour le transport sur ledit lien desdits flux affluents de ladite liaison multipoint égal au débit maximum parmi les débits nécessaires de toutes les topologies logiques que peut prendre ledit réseau de transport.

6. Procédé de dimensionnement selon la revendication 5, **caractérisé en ce que** le débit nécessaire au transport par lesdites unités de transport de tous les flux affluents de toutes les liaisons multipoint impliquant ledit lien est la somme des débits nécessaires pour le transport sur ce lien de chacune des liaisons multipoint déterminées à l'étape b).

**7.** Procédé de dimensionnement selon la revendication 5 ou 6, **caractérisé en ce qu'**il comporte en outre, pour chacune desdites liaisons multipoint impliquant ledit lien, une étape c) de détermination du nombre d'unités de transport nécessaires au transport sur ledit lien de tous les flux affluents de ladite liaison multipoint comme étant égal au nombre entier supérieur ou égal au rapport du débit nécessaire pour le transport sur ce lien de ladite liaison multipoint déterminée à l'étape b) par le débit utile d'une unité de transport.

**8.** Procédé de dimensionnement selon une des revendications 5 à 7, chaque flux affluent étant lié à un contrat de trafic définissant un débit garanti et un débit crête, **caractérisé en ce que** ladite étape a) comprend :

- la détermination du débit maximal espéré de chaque flux affluent par addition du débit garanti défini par le contrat de trafic lié audit flux et d'un sur-débit égal à la différence entre débit crête et débit garanti dudit contrat de trafic pondérée par un facteur de risque, puis à
- la pondération du résultat par un facteur d'encapsulation égal au rapport du nombre d'octets nécessaires dans une trame du réseau de transport pour le transport du flux affluent concerné au nombre d'octets dudit flux affluent.

**9.** Procédé de dimensionnement selon une des revendications 5 à 8, **caractérisé en ce que**, pour déterminer chaque topologie logique que peut prendre chaque liaison multipoint dudit réseau de transport, ledit procédé inclut une étape de simulation, à partir d'une topologie logique de fonctionnement normal, une panne sur un lien dudit réseau de transport puis à mettre en oeuvre un protocole d'établissement de la nouvelle topologie logique de secours dudit lien.

**10.** Procédé de dimensionnement selon une des revendications précédentes, **caractérisé en ce que** lesdits flux affluents sont des flux Ethernet ainsi conformes à la norme IEEE 802.3.

**11.** Procédé de dimensionnement selon une des revendications précédentes, **caractérisé en ce que** l'encapsulation des flux affluents dans lesdites unités de transport est conforme à un protocole du type PPP, X86 ou GFP.

**Claims**

**1.** Method for dimensioning transport units of feeding flows over a link between two nodes of a transport network, said transport network being designed to provide multipoint connections, said method being **characterised**, for each of said multipoint connections involving said link, by:

a) a step for determining the information rate to be provided for transport over said link of all the feeding flows of said multipoint connection, the information rate to be provided ($D_i$) for a feeding flow ($F_i$) being defined by the maximum expected information rate ($E_i$) weighted by a factor depending on the encapsulation of the packets of said feeding flow, and
b) a step for determining the information rate necessary for transport by said transport units of said feeding flows of said multipoint connection,

and in that, for each of said multipoint connections, said step b) consists in calculating the information rate necessary for transport by said transport units of said feeding flows of said multipoint connection as being the smallest sum of the information rates to be provided determined in the step a) for the feeding flows of said multipoint connection flowing firstly in one direction and secondly in the other direction over said link.

**2.** Method for dimensioning according to claim 1, **characterised in that** the information rate necessary for transport by said transport units of all the feeding flows of all the multipoint connections involving said link is the sum of the information rates necessary for transport over this link of each of the multipoint connections determined in the step b).

**3.** Method for dimensioning according to claim 1, **characterised in that** in addition, for each of said multipoint connections involving said link, it comprises a step c) for determining the number of transport units necessary for transport over said link of all the feeding flows of said multipoint collection as being equal to the whole number greater than or equal to the ratio of the information rate necessary for transport over this link of said multipoint connection determined in the step b) by the effective information rate of a transport unit.

**4.** Method for dimensioning according to one of the preceding claims, each feeding flow being linked to a traffic contract defining a guaranteed information rate and a peak information rate, **characterised in that** said step a) comprises:

- determining the maximum expected information rate of each feeding flow by adding the guaranteed information rate defined by the traffic contract linked to said flow and an extra information rate equal to the difference between the peak information rate and the guaranteed information rate of said traffic contract weighted by a risk factor, then
- weighting the result by an encapsulation factor equal to the ratio of the number of bytes necessary in a frame of the transport network for transport of the feeding flow concerned to the number of bytes of said feeding flow.

**5.** Method for dimensioning transport units of feeding flows over a link between two nodes of a transport network, said transport network being designed to provide multipoint connections, said method being **characterised**, for each multipoint connection involving said link, by:

a) a step for determining the information rate to be provided for transport over said link of all the feeding flows of said multipoint connection, the information rate to be provided ($D_i$) for a feeding flow ($F_i$) being defined by the maximum expected information rate ($E_i$) weighted by a factor depending on the encapsulation of the packets of said feeding flow, and

b) a step for determining the information rate necessary for transport by said transport units of said feeding flows of said multipoint connection,

and in that said step for determining the information rate necessary for transport of said feeding flows includes, for each of the multipoint connections involving said link:

- a step for determining the information rate necessary for transport of said feeding flows of said multipoint connection over said link in each logical topological structure without loop reiteration which said multipoint connection can adopt, said information rate necessary in a logical topological structure being equal to the smallest sum of the information rates to be provided determined in the step a) for the feeding flows of said multipoint connection flowing firstly in one direction and secondly in the other direction over said link,
- a step for determining the information rate necessary for transport over said link of said feeding flows of said multipoint connection equal to the maximum information rate among the information rates necessary for all the logical topological structures which said transport network can adopt.

**6.** Method for dimensioning according to claim 5, **characterised in that** the information rate necessary for transport by said transport units of all the feeding flows of all the multipoint connections involving said link is the sum of the information rates necessary for transport over this link of each of the multipoint connections determined in the step b).

**7.** Method for dimensioning according to claim 5 or 6, **characterised in that** in addition for each of said multipoint connections involving said link, it comprises a step c) for determining the number of transport units necessary for transport over said link of all the feeding flows of said multipoint connection as being equal to the whole number greater than or equal to the ratio of the information rate necessary for transport over this link of said multipoint connection determined in the step b) by the effective information rate cf a transport unit.

**8.** Method for dimensioning according to one of claims 5 to 7, each feeding flow being linked to a traffic contract defining a guaranteed information rate and a peak information rate, **characterised in that** said step a) comprises:

- determining the maximum expected information rate of each feeding flow by adding the guaranteed information rate defined by the traffic contract linked to said flow and an extra information rate equal to the difference between the peak information rate and the guaranteed information rate of said traffic contract weighted by a risk factor, then
- weighting the result by an encapsulation factor equal to the ratio of the number of bytes necessary in a frame of the transport network for transport of the feeding flow concerned to the number of bytes of said feeding flow.

**9.** Method for dimensioning according to one of claims 5 to 8, **characterised in that**, to determine each logical topological structure that each multipoint connection of said transport network can adopt, said method includes a step for simulation, from a logical topological structure in normal operation, of a breakdown on a link of said transport network, then implementation of a protocol for establishing the new logical topological structure for restoring said link.

10. Method for dimensioning according to one of the preceding claims, **characterised in that** said feeding flows are Ethernet flows and thus in conformity with the standard IEEE 802.3.

11. Method for dimensioning according to one of the preceding claims, **characterised in that** the encapsulation of the feeding flows in said transport units is in conformity with a protocol of the type PPP, X86 or GFP.

**Patentansprüche**

1. Dimensionierungsverfahren von Datenrahmen von Verkehrsströmen auf einer Verbindung zwischen zwei Knoten eines Transportnetzes, wobei das Transportnetz vorgesehen ist, um Multipunktverbindungen sicherzustellen, für jede die Verbindung betreffende Multipunktverbindungen, **gekennzeichnet durch**:

a) einen Schritt des Bestimmens des für den Transport aller Verkehrsströme der Multipunktverbindung auf der Verbindung bereitzustellenden Durchsatzes, wobei für einen Verkehrsstrom ($F_i$) der bereitzustellende Durchsatz ($D_i$) **durch** den maximal erhofften Durchsatz ($E_i$) gewichtet mit einem Faktor, der von der Kapselung der Pakete des Verkehrsstroms abhängt, definiert ist, und
b) einen Schritt des Bestimmens des für den Transport durch die Datenrahmen der Verkehrsströme der Multipunktverbindung erforderlichen Durchsatzes,

und **durch** die Tatsache, dass für jede der Multipunktverbindungen der Schritt b) darin besteht, den Durchsatz, der für den Transport **durch** die Datenrahmen der Verkehrsströme der Multipunktverbindung erforderlich ist, als die kleinste Summe der in Schritt a) bestimmten bereitzustellenden Durchsätze der Verkehrsströme der Multipunktverbindung zu berechnen, die einerseits auf der Verbindung in die eine Richtung und andererseits in die andere Richtung zirkulieren.

2. Dimensionierungsverfahren nach Anspruch 1, **dadurch gekennzeichnet, dass** der für den Transport durch die Datenrahmen aller Verkehrsströme aller Multipunktverbindungen erforderliche Durchsatz, den die Verbindung bedingt, die Summe der Durchsätze ist, die für den Transport auf dieser Verbindung jeder der in Schritt b) bestimmten Multipunktverbindungen erforderlich ist.

3. Dimensionierungsverfahren nach Anspruch 1, **dadurch gekennzeichnet, dass** es ferner für jede der Multipunktverbindungen, die die Verbindung betreffen, einen Schritt c) des Bestimmens der Anzahl von Datenrahmen aufweist, die auf der Verbindung für den Transport aller Verkehrsströme der Multipunktverbindung erforderlich sind, als gleich der Ganzzahl größer oder gleich dem Verhältnis des erforderlichen Durchsatzes für den Transport auf dieser Verbindung der in Schritt b) bestimmten Multipunktverbindung und des Nutzdurchsatzes eines Datenrahmens ist.

4. Dimensionierungsverfahren nach einem der vorhergehenden Ansprüche, wobei jeder Verkehrsstrom mit einem Verkehrsvertrag verbunden ist, der einen garantierten Durchsatz und einen Spitzendurchsatz definiert, **dadurch gekennzeichnet, dass** der Schritt a) Folgendes aufweist:

- das Bestimmen des maximal erhofften Durchsatzes jedes Verkehrsstroms durch Addieren des verbunden mit dem Strom durch den Verkehrsvertrag garantierten definierten Durchsatzes und eines Überdurchsätzes gleich dem Unterschied zwischen dem Spitzendurchsatz und dem garantierten Durchsatz des Verkehrsvertrags gewichtet mit einem Risikofaktor und dann
- Gewichten des Ergebnisses mit einem Kapselungsfaktor gleich dem Verhältnis der Anzahl Bytes, die in einem Rahmen des Transportnetzes für den Transport des betreffenden Verkehrsstroms erforderlich sind, und der Anzahl Bytes des Verkehrsstroms.

5. Dimensionierungsverfahren für Datenrahmen von Verkehrsströmen auf einer Verbindung zwischen zwei Knoten eines Transportnetzes, wobei das Transportnetz dazu vorgesehen ist, Multipunktverbindungen sicherzustellen, für jede der die Verbindung betreffenden Multipunktverbindungen **gekennzeichnet durch**:

a) einen Schritt des Bestimmens des für den Transport aller Verkehrsströme der Multipunktverbindung auf der Verbindung bereitzustellenden Durchsatzes, wobei der bereitzustellende Durchsatz ($D_i$) für einen Verkehrsstrom ($F_i$) **durch** den maximal erhofften Durchsatz ($E_i$) gewichtet mit einem Faktor, der von der Kapselung der Pakete des Verkehrsstroms abhängt, definiert ist, und
b) einen Schritt des Bestimmens des Durchsatzes, der für den Transport **durch** die Datenrahmen der Verkehrsströme der Multipunktverbindung erforderlich ist,

und **durch** die Tatsache, dass der Bestimmungsschritt des Durchsatzes, der für den Transport der Verkehrsströme erforderlich ist, für jede der Multipunktverbindungen, die die Verbindung betreffen, Folgendes aufweist:

- einen ersten Schritt des Bestimmens des Durchsatzes, der für den Transport der Verkehrsströme der Multipunktverbindung auf der Verbindung in jeder logischen Topologie ohne Rückverschleifen, das die Multipunktverbindung annehmen kann, erforderlich ist, wobei der in einer logischen Topologie erforderliche Durchsatz gleich der kleinsten Summe der in Schritt a) bestimmten bereitzustellenden Durchsätze der Verkehrsströme der Multipunktverbindung ist, die einerseits in eine Richtung und andererseits in die andere Richtung zirkulieren,
- einen Schritt des Bestimmens des Durchsatzes, der für den Transport der Verkehrsströme der Multipunktverbindung auf der Verbindung erforderlich ist, gleich dem maximalen Durchsatz unter den erforderlichen Durchsätzen aller logischen Topologien, die das Transportnetz annehmen kann.

6. Dimensionierungsverfahren nach Anspruch 5, **dadurch gekennzeichnet, dass** der für den Transport durch die Datenrahmen aller Verkehrsströme aller Multipunktverbindungen, die die Verbindung betreffen, erforderliche Durchsatz die Summe der Durchsätze ist, die für den Transport auf dieser Verbindung jeder der in Schritt b) bestimmten Multipunktverbindungen erforderlich sind.

7. Dimensionierungsverfahren nach Anspruch 5 oder 6, **dadurch gekennzeichnet, dass** es ferner für jede der Multipunktverbindungen, die die Verbindung betreffen, einen Schritt c) des Bestimmens der Anzahl von Datenrahmen aufweist, die auf der Verbindung für den Transport aller Verkehrsströme der Multipunktverbindung erforderlich sind, als gleich der Ganzzahl größer oder gleich dem Verhältnis des erforderlichen Durchsatzes für den Transport auf dieser Verbindung der in Schritt b) bestimmten Multipunktverbindung und des Nutzdurchsatzes eines Datenrahmens ist.

8. Dimensionierungsverfahren nach einem der Ansprüche 5 bis 7, wobei jeder Verkehrsstrom mit einem Verkehrsvertrag verbunden ist, der einen garantierten Durchsatz und einen Spitzendurchsatz definiert, **dadurch gekennzeichnet, dass** der Schritt a) Folgendes aufweist:

- das Bestimmen des maximal erhofften Durchsatzes jedes Verkehrsstroms durch Addieren des garantierten Durchsatzes, der durch den Verkehrsvertrag in Zusammenhang mit dem Strom definiert wird, und eines Überdurchsatzes gleich dem Unterschied zwischen dem Spitzendurchsatz und dem garantierten Durchsatz des Verkehrsvertrags, gewichtet mit einem Risikofaktor, und dann
- Gewichten des Ergebnisses mit einem Kapselungsfaktor gleich dem Verhältnis der Anzahl von Bytes, die in einem Rahmen des Transportnetzes für den Transport des betreffenden Verkehrsstroms erforderlich sind, und der Anzahl Bytes des Verkehrsstroms.

9. Dimensionierungsverfahren nach einem der Ansprüche 5 bis 8, **dadurch gekennzeichnet, dass** zum Bestimmen jeder logischen Topologie, welche jede Multipunktverbindung des Transportnetzes annehmen kann, das Verfahren einen Simulationsschritt ausgehend von einer logischen Topologie beim normalen Betrieb, einer Panne auf einer Verbindung des Transportnetzes aufweist, und dann das Umsetzen eines Protokolls zum Erstellen der neuen logischen Hilfstopologie der Verbindung.

10. Dimensionierungsverfahren nach einem der vorhergehenden Ansprüche, **dadurch gekennzeichnet, dass** die Verkehrsströme Ethernet-Ströme gemäß der Norm IEEE 802.3 sind.

11. Dimensionierungsverfahren nach einem der vorhergehenden Ansprüche, **dadurch gekennzeichnet, dass** das Kapseln der Verkehrsströme in den Datenrahmen einem Protokoll des Typs PPP, X86 oder GFP entspricht.

Fig. 1

Fig. 2

Fig. 3

Fig. 4

EP 1 655 900 B1

Fig. 5

Fig. 6

EP 1 655 900 B1

$L_{j,j+1}$

q₁ flux   L₁

(p₁-q₁)flux

q_z flux   L_z

$N_j$   $N_{j+1}$

(p_z-q_z)flux

q_z flux   L_z

(p_z-q_z)flux

Fig. 7

**EP 1 655 900 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6377583 B1